# EUROPEAN PATENT SPECIFICATION

(11) **EP 3 109 079 B1**
(45) Date of publication and mention of the grant of the patent: **12.07.2017**
(21) Application number: 15173923.2
(22) Date of filing: 25.06.2015
(51) Int. Cl.: B60H 1/34

(54) **AIR DISCHARGE DEVICE**
LUFTENTLADUNGSVORRICHTUNG
DISPOSITIF DE DÉCHARGE D'AIR

(43) Date of publication of application: 28.12.2016
(73) Proprietor: Dr. Schneider Kunststoffwerke GmbH, 96317 Kronach (DE)
(72) Inventor: SHABBEER, Shaik, 96317 Kronach (DE); SPERSCHNEIDER, Maik, 96465 Neustadt bei Coburg (DE)
(74) Representative: Pröll, Jürgen

(56) References cited:
- DE-U1-202010 000 445
- DE-U1-202013 100 257
- JP-A- 2005 009 751
- JP-A- 2010 018 194
- US-A1- 2013 078 900

## Description

It is disclosed an air discharge device for conducting and controlling an airflow out of an air feed shaft or an air feed duct in a heating, ventilation or air-conditioning installation. Air discharge devices are provided in land, water and air vehicles, such as automobiles, boats or aircrafts.

### State of the art

An air discharge device for controlling and adjusting an airflow comprises at least one control element. In many known installations, one control element provides controlling of horizontal and vertical fins as well as controlling the amount of an airflow by adjusting closing means. Such control elements are often arranged slidably or pivotably on a pivotable horizontal control fin. Thereby, if the control element is moved in vertical direction the control fin is tilted. If the control element is moved in horizontal direction, vertical fins are tilted.

In such installations, the control element often comprises also a wheel wherein the wheel is coupled with closing means. Thereby, if the wheel is rotated the closing means open and close an air feed shaft. Such an air discharge device is disclosed in DE 20 2013 100 257 U1.

DE 20 2010 000 445 U1 discloses an air discharge device with a single control element. The control element is rotatably supported in a bearing of a fin arrangement. The fin arrangement can be tilted by means of the control element. Thereby, the control element is moved in vertical direction.

Furthermore, the control element comprises two protruding elements and a vertical fin is supported between these protruding elements. Rotating the control element causes tilting of vertical fins. Further, the control element comprises a guidance in a cylindrical portion of the control element. A pin is supported in the guidance and is coupled over rods with a pivotable plate. If the control element is moved along its rotation axis, the plate opens and closes an air feed shaft.

DE 10 2007 019 602 B3 discloses a round air nozzle with a cone-shaped air guide element and a plug, which can be moved in direction of the airflow and the cone-shaped air guide element, to control the amount of the airflow. However, the control of the airflow direction is carried out by tilting the cone-shaped air guide element. DE 10 2007 019 602 B3 does not disclose fins.

### Problems of the state of the art

The state of the art discloses installations with many components to control the direction of an airflow and to adjust the extent and amount of the airflow. Furthermore, known air discharge devices are complex in their kinematics.

### Object

Thus, it is an object to provide an air discharge device with fins and closing means for controlling an airflow wherein the control is carried out with less parts in a simple manner and wherein the control parts do not disturb the airflow.

### Solution

The object is fulfilled by an air discharge device comprising pivotably supported fins, extending orthogonally to each other, wherein one of the fins is a control fin, and a control element, controlling the fins for adjusting the direction of an airflow and controlling closing means comprising at least one flap for adjusting the extent and amount of the airflow, the control element comprises:
- a slider with a bearing slidable along the control fin,
- a slidable actuating element supported in said bearing, wherein the actuating element comprises a heart-shaped cam,
- a guide element, slidably supported in a guidance of the control fin,
- spring means connected on one side with the actuating element and connected on the other side with an actuating member, wherein the actuating member is coupled with at least one fin, extending orthogonally to the control fin, and
- a connecting element extending orthogonally to the control fin and coupled with the actuating member and at least one flap,
wherein
- the connecting element is slidably supported orthogonally to the control fin,
- the guidance of the control fin extends parallelly to the longitudinal axis of the control fin,
- one end of the guide element is supported in said guidance and the other end is guided in said heart-shaped cam,
- the actuating member comprises a pin supported in a curved recess of the connecting element, and
- the connecting element comprises at least one pin supported in a curved recess of a pivoting member of the flap.

The air discharge device allows a control of the airflow by pivoting the fins through a displacement of the slider. The air discharge device also enables a control of the amount of the airflow through a simple push-push mechanism wherein the actuating element can be pushed into the slider. If the slider is pressed downwards the control fin is also pivoted downwards. For example, the slider is pressed downwards by the actuating element. If a force is applied orthogonally to the longitudinal axis of the control fin the control fin is pivoted and the slider does not change its position along the control fin. If a force is applied in the longitudinal direction of the control fin on the slider or the actuating element, the slider moves along the control fin. Thus, fins arranged orthogonally to the control fin are pivoted by means of the actuating member.

The actuating element protrudes in an inactive state at least to a certain distance of the bearing of the slider. In the inactive state, the closing means fully opens or closes an air feed shaft or an air feed duct of a heating, ventilation or air-conditioning installation. If a force is applied on the actuating element, the actuating element is moved along the bearing whereas the actuating member is moved away from the slider and thus enables a corresponding movement of the connecting element. After a defined displacement due to the design of the heart-shaped cam, the actuating element is brought to a position in which the actuating element protrudes a second distance of the bearing of the slider. However, the second distance in the displaced position of the actuating element is less than in the inactive state. The connecting element then enables pivoting of the at least one flap wherein the pin of the connecting element is also moved due to the movement of the actuating member and, thus, the pin causes the at least one flap to pivot. The flap is pivotally arranged. The flap cannot be displaced according to the movement of the other components in the same direction. The curved recess in the pivoting member enables pivoting of the flap wherein the pin is guided in the recess. After that, a force can be applied again on the actuating element so that the actuating element and the other components connected or coupled with the actuating element return to the inactive position.

The guide element is guided in the guidance of the control fin and is also guided in the heart-shaped cam, which enables, together with the spring means, a push-push mechanism. Moreover, the design of the connecting element comprising a curved recess enables the closing means to open and close in every position of the fins, especially the fins arranged orthogonally to the control fin.

According to the design of the heart-shaped cam, intermediate positions of the closing means, especially the at least one flap, can also be accomplished.

The spring means can comprise elastic means, like rubber elements, or pneumatic, magnetic or mechanical elements.

In an embodiment, said spring means comprise at least one compression spring.

The actuating element can comprise at least one guide member guiding the actuating element and the actuating member. The guide member especially ensures that the actuating member does not change its parallel arrangement relative to the actuating element when a space between the actuating element and the actuating member is changed. The at least one guide element can be arranged on the actuating member wherein the guide element is supported in a bearing in the actuating element. Furthermore, at least one compression spring can encompass such a guide member.

In an alternative embodiment, the air discharge device comprises at least one telescopic guide rod, one end of said telescopic guide rod is connected to the actuating element and the other end of said telescopic guide rod is connected to the actuating member. A telescopic guide rod is a special embodiment of a guide member, whereas the guide member is only connected with either the actuating member or the actuating element and the telescopic guide rod is connected with the actuating member and the actuating element.

In a further embodiment, the at least one compression spring encompasses the at least one guide rod.

In an alternative embodiment, the closing means comprises two flaps, wherein said flaps are supported pivotally by a common rotation axis and the curved recesses of the pivoting members of said flaps are arranged opposite to each other and facing each other. A movement of the connecting element enables pivoting of both flaps which are pivoted about a common rotation axis.

In a further embodiment, the connecting element comprises two pins arranged on opposite sides of said connecting element wherein the pins extend parallelly to the rotation axis.

Each pin of the connecting element may comprise a longitudinal axis which is arranged parallelly to the longitudinal axis of the other pin.

In an alternative embodiment, the fin coupled with the actuating member comprises a recess and a rod, wherein said rod is supported in a fork of said actuating member. The recess ensures that the at least one fin extending orthogonally to the control fin can be pivoted in every position of the control fin.

The actuating member may comprise a plate-shaped form. On the side facing the actuating element the actuating member is at least connected with the spring means. On the other side of the actuating member the pin supported in the curved recess of the connecting element is arranged. Further, coupling means for coupling the actuating member with the at least one fin extending orthogonally to the control fin are arranged on the same side of the actuating member as said pin. For example, the coupling means comprise the fork.

Further, the connecting element may comprise an open structure. An open structure ensures that the airflow is not disturbed by means of the control element. Furthermore, the connecting element extends parallelly to the fins extending orthogonally to the control fin whereby an airflow disturbance is reduced.

In a still further embodiment, the control fin is coupled with at least one fin extending parallelly to the control fin and/or the fin coupled with the actuating member is coupled with at least one fin extending parallelly to said fin. Thereby, pivoting the control fin and/or the fin coupled with the actuating member causes pivoting of fins arranged parallelly to the control fin or the fin coupled with the fin coupled with the actuating member.

In further embodiments, a connection rod couples said fins.

In a further embodiment, the control fin comprises a guide section comprising said guidance of the control fin and defining the displacement path of the slider. The guide section is located in the middle of the control fin. The guide section may be constructed as a bridge connecting two control fin sections extending from the central guide section to the exterior sides of the control fin. The bridge connects the two control fin sections in such a manner that a defined space exits between the lateral sides of the control fin sections facing each other. The actuating element extending at least partially through the slider abuts on the lateral sides of the control fin sections facing each other during displacement of the slider. Thus, the space between the control fin sections defines the displacement path of the slider.

At least one of the fins, flaps, slider, actuating element, actuating member, connecting element and guide element consists of plastic material. Other materials may also be applied for the components of the air discharge device, for example metals and alloys. Especially, compression springs consist of metal and spring steel, respectively.

### Brief description of the drawings

Further features, benefits and embodiments will be set forth in empflifying embodiments presented in the accompanying drawings.
- Fig. 1: shows an exemplary embodiment of an air discharge device without housing;
- Fig. 2: shows a sectional view of a control fin, a slider and an actuating element;
- Fig. 3: shows a top view of a control fin and parts of a control element;
- Fig. 4: shows a sectional view of a control fin and parts of a control element;
- Fig. 5: shows a further top view of parts of a control element;
- Fig. 6: shows a perspective view of parts of a control element and a flap;
- Fig. 7: shows a further perspective view of components of the air discharge device; and
- Fig. 8: shows a side-view of a control element and components of the air discharge device.

### Detailed description of an embodiment

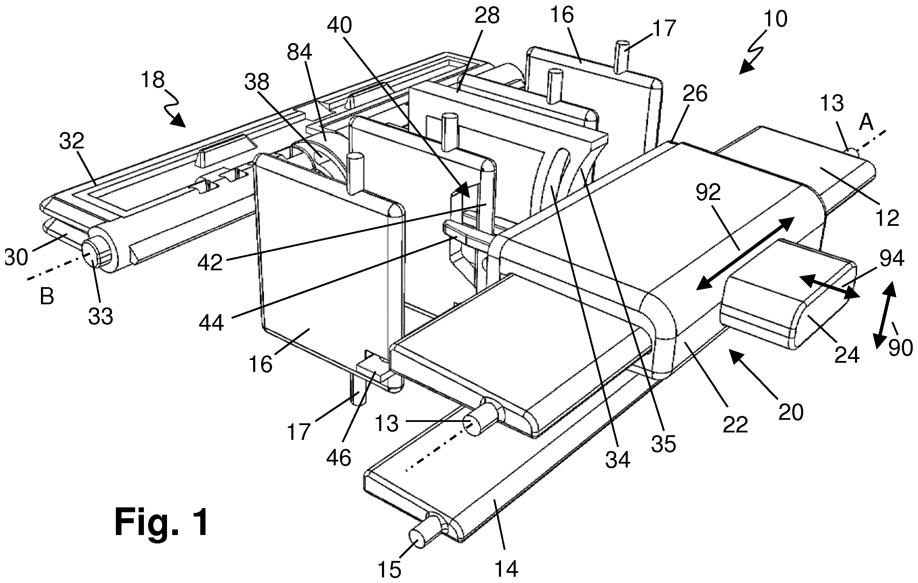

Figs. 1-8 show an exemplary embodiment of an air discharge device 10 and components of the air discharge device 10, wherein like reference signs refer to like components. Moreover, only components are shown and explained which are necessary to understand the teachings disclosed herein.

Fig. 1 shows an air discharge device 10. The air discharge device 10 comprises a housing (not shown) and fins 12, 14, 16 pivotally supported in the housing. Fin 12 is supported by bearing pins 13 in bearing holes on opposite sidewalls of the housing. Fin 14 extending parallelly to fin 12 is supported by bearing pins 15 in bearing holes on said opposite sidewalls of the housing. Fins 16 extending orthogonally to fin 12 and fin 14 are supported by bearing pins 17 in bearing holes on opposite walls of the housing. Fins 12, 14 and 16 can be pivoted by means of a control element 20. The control element 20 also provides for the control of closing means 18.

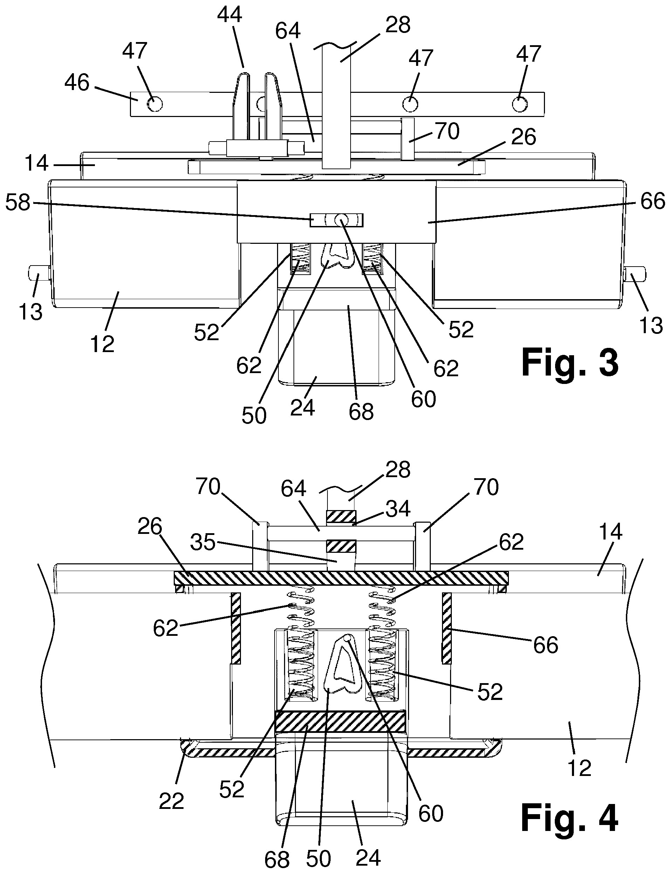

Control fin 12 comprises two control fin sections extending from a central guide section to the exterior sides of the control fin 12. The two control fin sections are connected by a connection bridge 66 (Figs. 3 and 4). The connection bridge 66 comprises a guidance 58 in which a guide element 60 of the control element 20 is partially inserted. The connection bridge 66 connects the two control fin sections in such a manner that a defined space exits between the lateral sides of the control fin sections facing each other. Control fin 12 is coupled with fin 14 by means of a connection rod (not shown).

One of the fins 16 comprises a recess 40 and a rod 42 closing the recess 40. The rod 42 is supported by a fork 44 of the control element 20. The recess 40 ensures that the fork 44 does not abut against the sides of said fin 16. Said fin 16 is coupled with the other fins 16 by means of a connection rod 46. Connection rod 46 comprises at least four bearing holes 47. Bearing pins of fins 16 are supported in said bearing holes 47 so that the pivoting of said fin 16 causes a synchronic pivoting of the other fins 16. The bearing pins of fins 16 run parallelly to the pivot axis of fins 16 extending through the pins 17.

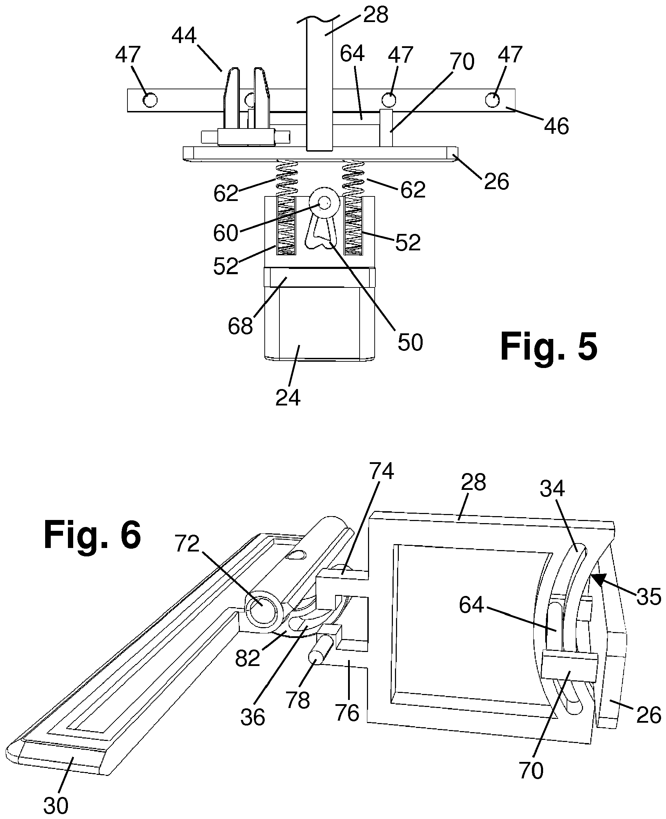

Closing means 18 comprise two flaps 30 and 32. Flaps 30 and 32 are pivotally supported by bearing pins 31 and 33 in bearing holes on said opposite sidewalls of the housing. Flap 30 comprises bearing pin 31 and flap 32 comprises bearing pin 33. Flap 30 comprises an opening 72 in which a corresponding pin of flap 32 is supported (Fig. 6). The flaps 30 and 32 comprises a common rotation axis B extending through the bearing pins 31 and 33, the opening 72 and the corresponding pin (not shown). The flaps 30 and 32 can be pivoted by means of the control element 20, especially by displacement of a connecting element 28. For this purpose, the flaps 30 and 32 comprises curved pivoting members 82 and 84. The pivoting members 82 and 84 comprise a curved recess 36 and a curved recess 38, respectively. Flaps 30 and 32 can be pivoted from an open position, shown in Fig.1, to a closed position (not shown) wherein the flaps 30 and 32 move away from each other.

The control element 20 comprises an actuating element 24, a slider 22, an actuating member 26 and the connecting element 28. The control element 20 also comprises the guide element 60, compression springs 62, the fork 44 and a pin 64.

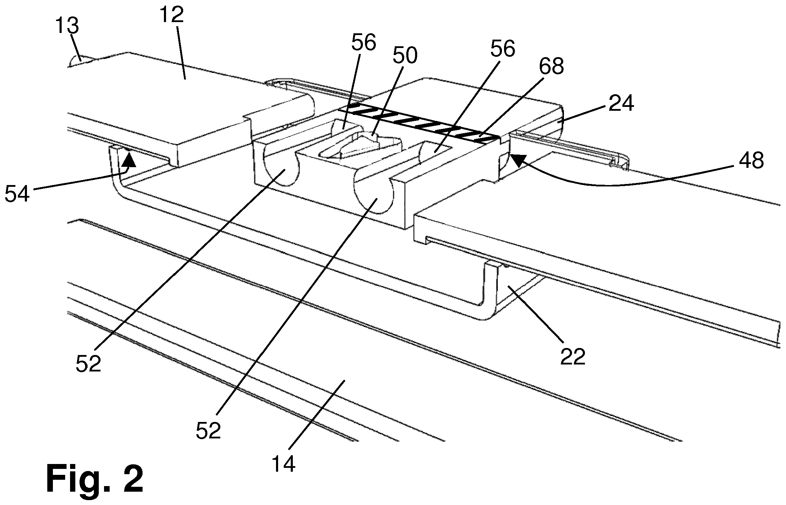

Slider 22 is slidably supported on the control fin 12. Slider 22 has two recesses 54 through which the control fin sections extend into the slider 22. Slider 22 also has a bearing 48 through which the actuating element 24 extends into the slider 22 (Fig. 2). As depicted in Fig. 2, slider 22 can be moved along control fin 12 due to the space defined between the lateral sides of the control fin sections facing each other wherein the actuating element 24 abuts against the lateral sides of the control fin sections in its end positions. The actuating element 24 which extends at least partially through the slider 22 abuts on the lateral sides of the control fin sections facing each other during displacement of the slider 22. Thus, the space between the control fin sections defines the displacement path of the slider 22. Additionally or alternatively, the lateral movement of the slider 22 along the control fin 12 is restricted by stopper elements at the lateral sides of the control fin sections facing each other. Stopper elements may comprise a rubber layer, a rubber coating or the like.

Actuating element 24 comprises a heart-shaped cam 50 and two bearings 52. Compression springs 62 are supported in the bearings 52 and abuts on one end against bearing surfaces 56. The other end of the compression springs 62 is connected to the actuating member 26 (Figs. 4 and 5). The guide element 60 is guided and partially inserted in the heart-shaped cam 50 and the guidance 58 of the connection bridge 66.

Slider 22 may comprise two parts of plastic material which are connected by means of ultrasonic welding, bonding or heating. Slider 22 comprises an open rear side facing the connecting element 28. The actuating member 26 has a plate-like shape and abuts against the circumferential edge of the open rear side of the slider 22. The actuating member 26 comprises the fork 44 which encompasses the rod 42 of fin 16. The actuating member 26 also comprises two support bars 70. The support bars 70 are connected with the pin 64.

The connecting element 28 comprises a curved section 35 facing the actuating member 26 and a curved recess 34. Pin 64 coupled with the actuating member 26 is received in the curved recess 34. Thus, in every pivoted position of the control fin 12 displacement movement of the actuating member 26 can be transmitted to the connecting element 28. The connecting element 28 can be guided in the housing of the air discharge device 10. The air discharge device 10 comprises at least one guide rail in which the connecting element 28 is partially supported. The connecting element 28 comprises an open structure which enables an airflow to pass. The connecting element 28 also comprises two nose elements 74 and 76 serving as support bars for a pin 78 and a pin 80. Pin 78 and pin 80 are supported in the curved recesses 36 and 38 of pivoting member 82 and pivoting member 84, respectively. Pins 78 and 80 are arranged opposite to each other. Further, pin 78 and pin 80 comprising different parallel longitudinal axis. Due to the rotatable mounting of the flaps 30 and 32 any movement of the connecting element 28 causes pivoting of the flaps 30 and 32.

Fig. 2 shows a sectional view of the control fin 12, the slider 22 and the actuating element 24. The actuating element 24 comprises a wall 68 which is arranged inside the slider 22. The wall 68 increases the cross section of the actuating element 24 and prevents the actuating element 24 to be pressed out of the slider 22 by means of the compression springs 62.

Fig. 3 shows a top view of the control fin 12 and parts of the control element 20, namely the actuating element 24, compression springs 62, guide element 60, actuating member 26, fork 44, pin 68 and connecting element 28. Further, Fig. 3 shows fin 14 and connection rod 46.

Fig. 4 shows a sectional view of the control fin 12 and parts of the control element 20 and Fig. 5 shows a further top view of parts of the control element 20. Fig. 5 also shows the connection rod 46.

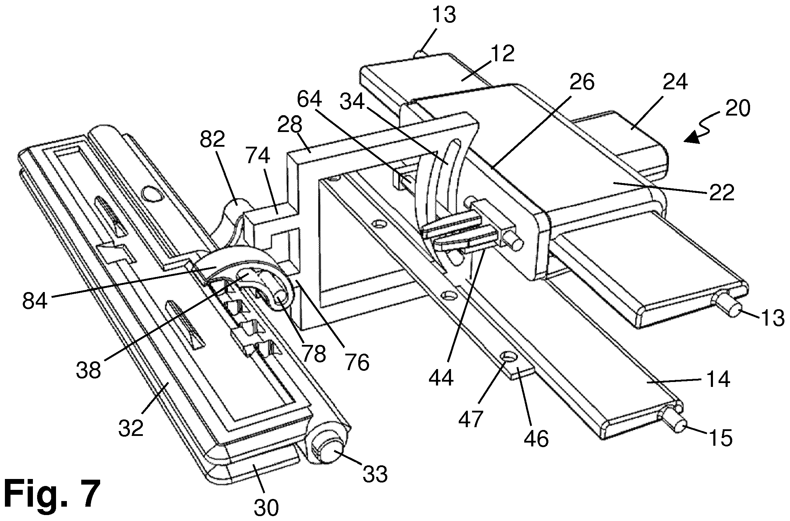

Fig. 6 shows a perspective view of parts of the control element 20 and the flap 30 and Fig. 7 shows a further perspective view of components of the air discharge device 10 without the housing and fins 16.

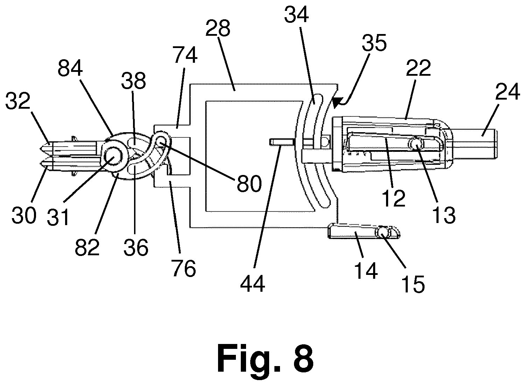

Fig. 8 shows a side-view of the control element 20 and components of the air discharge device 10 namely control fin 12 and fin 14.

Following, the operation of the air discharge device 10 is described referring to Figs. 1-8.

Figs. 1-8 show the orientation of fins 12, 14, 16 and flaps 30, 32 in a condition without any change, namely in an initial position.

Thus, an airflow passes the air discharge device 10 without any deviation. If a force is applied on the actuating element 24 or the slider 22 in a vertical direction 90, fins 12 and 14 are pivoted. Then, the airflow is deviated downwards. If a force is applied on the actuating element 24 or the slider 22 in a horizontal direction 92, fins 16 are pivoted. Thereby, slider 22 is moved in the horizontal direction 92. In addition, fork 44 coupled with the actuating element 24 and thus with the slider 22 is moved in the same horizontal direction 92.

If a force is applied in direction 94, actuating element 24 is pressed in the slider 22. After a defined displacement of actuating element 24, actuating element 24 abuts against the actuating member 26 and moves the actuating member 26 towards the connecting element 28 and away from the slider 22. Then, connecting element 28 is moved by pin 64 in the same direction 94. Movement of connecting element 28 causes pivoting of flaps 30 and 32. The flaps 30 and 32 are passed from the initial position in a closed position. In the initial position the flaps 30, 32 extending in a horizontal plane and in the closed position extending in a vertical plane. Flaps 30 and 32 close an air feed duct in the closed position so that the airflow for the air discharge device 10 is interrupted.

During the displacement of actuating element 24, the guide element 60 follows the heart-shaped cam 50. After the actuating element 24 has exceed a maximal displacement in direction 94, guide element 60 is transferred in a lower section of heart-shaped cam 50 and accordingly in a section of heart-shaped cam 50 facing the front side of air discharge device 10. If the guide element 60 is transferred in the lower section the actuating element 24 is hold in that position wherein the extend of the actuating element 24 which is located in the slider 22 is greater than in the initial position. The transferred position of the actuating member 26 and the connecting member 28 is maintained until a force is applied in direction 94 again.

If a force is applied again, the actuating element 24 is displaced in the direction 94 towards the connecting element 28 by a small distance. This displacement enables the guide element 60 to unlock the closed condition wherein guide element 60 is transferred to the left path of heart-shaped cam 50 (Fig. 4). After that, actuating element 24 can move back to its initial position whereas actuating member 26 also moves back to its initial position. Thereby, connecting element 28 is transferred to its initial position and flaps 30 and 32 are pivoted to reach their initial position.

### Reference signs

- 10: air discharge device
- 12: control fin
- 13: bearing pin
- 14: fin
- 15: bearing pin
- 16: fin
- 17: bearing pin
- 18: closing means
- 20: control element
- 22: slider
- 24: actuating element
- 26 6: actuating member
- 28: connecting element
- 30: flap
- 31: bearing pin
- 32: flap
- 33: bearing pin
- 34: recess
- 35: section
- 36: recess
- 38: recess
- 40: recess
- 42: rod
- 44: fork
- 46: connection rod
- 47: bearing hole
- 48: bearing
- 50: heart-shaped cam
- 52: bearing
- 54: recess
- 56: bearing surface
- 58: guidance
- 60: guide element
- 62: compression spring
- 64: pin
- 66: connection bridge
- 68: wall
- 70: support bar
- 72: opening
- 74: nose element
- 76: nose element
- 78: pin
- 80: pin
- 82: pivoting member
- 84: pivoting member
- 90: direction
- 92: direction
- 94: direction

- A: axis
- B: axis

## Claims

1. Air discharge device, comprising pivotably supported fins (12, 14, 16), extending orthogonally to each other, wherein one of the fins (12, 14, 16) is a control fin (12), and a control element (20) controlling the fins (12, 14, 16) for adjusting the direction of an airflow and controlling closing means (18) comprising at least one flap (30; 32) for adjusting the extent and amount of the airflow, wherein the control element (20) comprises:
- a slider (22) with a bearing (48) slidable along the control fin (12),
- a slidable actuating element (24) supported in said bearing (48), wherein the actuating element (24) comprises a heart-shaped cam (50),
- a guide element (60), slidably supported in a guidance (58) of the control fin (12),
- spring means (62) connected on one side with the actuating element (24) and connected on the other side with a actuating member (26), wherein the actuating member (26) is coupled with at least one fin (16), extending orthogonally to the control fin (12), and
- a connecting element (28) extending orthogonally to the control fin (12) and coupled with the actuating member (26) and at least one flap (30; 32),
wherein
- the connecting element (28) is slidably supported orthogonally to the control fin (12),
- the guidance (58) of the control fin (12) extends parallelly to the longitudinal axis of the control fin (12),
- one end of the guide element (60) is supported in said guidance (58) and the other end is guided in said heart-shaped cam (50),
- the actuating member (26) comprises a pin (64) supported in a curved recess (34) of the connecting element (28), and
- the connecting element (28) comprises at least one pin (78; 80) supported in a curved recess (36; 38) of a pivoting member (82; 84) of the flap (30; 32).

2. Air discharge device according to claim 1, wherein said spring means comprises at least one compression spring (62).

3. Air discharge device according to claim 1 or 2, comprising at least one telescopic guide rod, one end of said telescopic guide rod is connected to the actuating element (24) and the other end of said telescopic guide rod is connected to the actuating member (26).

4. Air discharge device according to claim 3, wherein the at least one compression spring (62) encompasses the at least one guide rod.

5. Air discharge device according to claims 1 to 4, wherein the closing means (18) comprising two flaps (30, 32), said flaps (30, 32) are supported pivotally by a common rotation axis (B), wherein the curved recesses (36, 38) of the pivoting members (82, 84) of said flaps (30, 32) are arranged opposite to each other and facing each other.

6. Air discharge device according to claim 5, wherein the connecting element (28) comprises two pins (78, 80), arranged on opposite sides of said connecting element (28) extending parallelly to the rotation axis (B).

7. Air discharge device according to claim 6, wherein each pin (78, 80) of the connecting element (28) comprises a longitudinal axis parallel to the longitudinal axis of the other pin (80, 78).

8. Air discharge device according to claims 1 to 7, wherein the fin (16) coupled with the actuating member (26) comprises a recess (40) and a rod (42), wherein said rod (42) is supported in a fork (44) of said actuating member (26).

9. Air discharge device according to any of claims 1 to 8, wherein the actuating member (26) comprises a plate-shaped form.

10. Air discharge device according to claims 1 to 9, wherein the connecting element (28) comprises an open structure.

11. Air discharge device according to any of claims 1 to 10, wherein the control fin (12) is coupled with at least one fin (14) parallel to the control fin (12), and/or the fin (16) coupled with the actuating member (26) is coupled with at least one fin (16) parallel to said fin (16).

12. Air discharge device according to claim 11, wherein said fins (12, 14; 16) are coupled by a connection rod (46).

13. Air discharge device according to any of claims 1 to 12, wherein the control fin (12) comprises a guide section comprising said guidance (58) of the control fin (12) and defining the displacement path of the slider (22).

14. Air discharge device according to any of claims 1 to 13, wherein at least one of the fins (12, 14, 16), flaps (30, 32), slider (22), actuating element (24), actuating member (26), connecting element (28) and guide element (60) consists of plastic material.

## Patentansprüche

1. Luftausströmer, aufweisend verschwenkbar gelagerte Lamellen (12, 14, 16), die sich orthogonal zueinander strecken, wobei eine der Lamellen (12, 14, 16) eine Steuerlamelle (12) ist, eine Steuereinrichtung (20) zum Steuern der Lamellen (12, 14, 16) zum Einstellen der Richtung eines Luftstroms und eine Schließeinrichtung (18), die mindestens eine Klappe (30; 32) zum Einstellen der Menge und des Ausmaßes des Luftstroms aufweist, wobei die Steuereinrichtung (20) aufweist:
- ein Schiebeelement (22) mit einer Lageröffnung (48), welches entlang der Steuerlamelle (12) verschiebbar ist,
- ein verschiebbares Bedienelement (24), das in der Lageröffnung (48) gelagert ist, wobei das Bedienelement (24) eine Herzkurve (50) aufweist,
- ein Führungselement (60), das verschiebbar in einer Führung (58) der Steuerlamelle (12) gelagert ist,
- eine Federeinrichtung, die an der einen Seite mit dem Bedienelement (24) und auf der anderen Seite mit einem Betätigungselement (26) verbunden ist, wobei das Betätigungselement (26) mit mindestens einer Lamelle (16) gekoppelt ist, die sich in einem rechten Winkel zur Steuerlamelle (12) erstreckt, und
- ein Verbindungselement (28), das sich rechtwinklig zur Steuerlamelle (12) erstreckt und mit dem Betätigungselement (26) und mindestens einer Klappe (30;32) gekoppelt ist,
wobei
- das Verbindungselement (28) orthogonal zur Steuerlamelle (12) verschiebbar gelagert ist,
- die Führung (58) der Steuerlamelle (12) sich parallel zur Längsachse der Steuerlamelle (12) erstreckt,
- ein Ende des Führungselements (60) in der Führung (58) und das andere Ende in der Herzkurve (50) geführt ist,
- das Betätigungselement (26) einen Stift (64) aufweist, der in einer gekrümmten Ausnehmung (34) des Verbindungselements (28) gelagert ist, und
- das Verbindungselement (28) mindestens einen Stift (78; 80) aufweist, der in einer gekrümmten Aufnahme (36; 38) eines Schwenkglieds (82; 84) der Klappe (30; 32) gelagert ist.

2. Luftausströmer nach Anspruch 1, wobei die Federeinrichtung mindestens eine Druckfeder (62) aufweist.

3. Luftausströmer nach Anspruch 1 oder 2, aufweisend mindestens eine teleskopierbare Führungsstange, wobei ein Ende der teleskopierbaren Führungsstange mit dem Bedienelement (24) und das andere Ende der teleskopierbaren Führungsstange mit dem Betätigungselement (26) verbunden ist.

4. Luftausströmer nach Anspruch 3, wobei die mindestens eine Druckfeder (62) die mindestens eine Führungsstange umgibt.

5. Luftausströmer nach einem der Ansprüche 1 bis 4, wobei die Schließeinrichtung (18) zwei Klappen (30, 32) aufweist, wobei die Klappen (30, 32) um eine gemeinsame Schwenkachse (B) verschwenkbar gelagert sind, wobei die gekrümmten Ausnehmungen (36, 38) der Schwenkglieder (82, 84) der Klappen (30, 32) entgegengesetzt angeordnet sind und sich gegenüberliegen.

6. Luftausströmer nach Anspruch 5, wobei das Verbindungselement (28) zwei Stifte (78, 80) aufweist, die an gegenüberliegenden Seiten des Verbindungselements (28) angeordnet sind und sich parallel zur Schwenkachse (B) erstrecken.

7. Luftausströmer nach Anspruch 6, wobei jeder Stift (78, 80) des Verbindungselements (28) eine Längsachse aufweist, die sich parallel zur Längsachse des anderen Stifts (80, 78) erstreckt.

8. Luftausströmer nach einem der Ansprüche 1 bis 7, wobei die Lamelle (16), die mit dem Betätigungselement (26) gekoppelt ist, eine Ausnehmung (40) und eine Stange (42) aufweist, wobei die Stange (42) in einer Gabel (44) des Betätigungselements (26) aufgenommen ist.

9. Luftausströmer nach einem der Ansprüche 1 bis 8, wobei das Betätigungselement (26) plattenförmig ausgebildet ist.

10. Luftausströmer nach einem der Ansprüche 1 bis 9, wobei das Verbindungselement (28) eine offene Struktur aufweist.

11. Luftausströmer nach einem der Ansprüche 1 bis 10, wobei die Steuerlamelle (12) mit mindestens einer Lamelle (14) gekoppelt ist, die parallel zur Steuerlamelle (12) verläuft, und/oder die Lamelle (16), die mit dem Betätigungselement (26) gekoppelt ist, mit mindestens einer Lamelle (16) gekoppelt ist, die parallel zu dieser Lamelle (16) ist.

12. Luftausströmer nach Anspruch 11, wobei die Lamellen (12, 14; 16) über eine Koppelstange (46) gekoppelt sind.

13. Luftausströmer nach einem der Ansprüche 1 bis 12, wobei die Steuerlamelle (12) einen Führungsabschnitt aufweist, welcher die Führung (58) der Steuerlamelle (12) aufweist und den Verschiebeweg der Schiebeeinrichtung (22) definiert.

14. Luftausströmer nach einem der Ansprüche 1 bis 13, wobei mindestens eine Lamelle (12, 14, 16), eine Klappe (30, 32), das Schiebeelement (22), das Bedienelement (24), das Betätigungselement (26), das Verbindungselement (28) und/oder das Führungselement (60) aus einem Kunststoff bestehen.

## Revendications

1. Dispositif de décharge d'air comprenant des ailettes (12, 14, 16) supportées de manière pivotante, s'étendant de manière orthogonale entre elles, dans lequel l'une des ailettes (12, 14, 16) est une ailette de commande (12) et un élément de commande (20) commandant les ailettes (12, 14, 16) pour ajuster la direction d'un écoulement d'air et commander des moyens de fermeture (18) comprenant au moins un volet (30, 32) pour ajuster l'étendue et la quantité d'écoulement d'air, dans lequel l'élément de commande (20) comprend :
une glissière (22) avec un palier (48) pouvant coulisser le long de l'ailette de commande (12),
un élément d'actionnement coulissant (24) supporté dans ledit palier (48), dans lequel l'élément d'actionnement (24) comprend une came en forme de coeur (50),
un élément de guidage (60) supporté de manière coulissante dans un guidage (58) de l'ailette de commande (12),
des moyens de ressort (62) raccordés d'un côté avec l'élément d'actionnement (24) et raccordés de l'autre côté avec un élément d'actionnement (26), dans lequel l'élément d'actionnement (26) est couplé avec au moins une ailette (16), s'étendant de manière orthogonale vers l'ailette de commande (12), et
un élément de raccordement (28) s'étendant de manière orthogonale vers l'ailette de commande (12) et couplé avec l'élément d'actionnement (26) et au moins un volet (30 ; 32),
dans lequel :
l'élément de raccordement (28) est supporté de manière coulissante et orthogonale sur l'ailette de commande (12),
le guidage (58) de l'ailette de commande (12) s'étend parallèlement à l'axe longitudinal de l'ailette de commande (12),
une extrémité de l'élément de guidage (60) est supportée dans ledit guidage (58) et l'autre extrémité est guidée dans ladite came en forme de coeur (50),
l'élément d'actionnement (26) comprend une broche (64) supportée dans un évidement incurvé (34) de l'élément de raccordement (28), et
l'élément de raccordement (28) comprend au moins une broche (78; 80) supportée dans un évidement incurvé (36 ; 38) d'un élément pivotant (82 ; 84) du volet (30 ; 32).

2. Dispositif de décharge d'air selon la revendication 1, dans lequel lesdits moyens de ressort comprennent au moins un ressort de compression (62).

3. Dispositif de décharge d'air selon la revendication 1 ou 2, comprenant au moins une tige de guidage télescopique, une extrémité de ladite tige de guidage télescopique est raccordée à l'élément d'actionnement (24) et l'autre extrémité de ladite tige de guidage télescopique est raccordée à l'élément d'actionnement (26).

4. Dispositif de décharge d'air selon la revendication 3, dans lequel ledit au moins un ressort de compression (62) comprend ladite au moins une tige de guidage.

5. Dispositif de décharge d'air selon les revendications 1 à 4, dans lequel les moyens de fermeture (18) comprennent deux volets (30, 32), lesdits volets (30, 32) sont supportés de manière pivotante par un axe de rotation (B) commun, dans lequel les évidements incurvés (36, 38) des éléments pivotants (82, 84) desdits volets (30, 32) sont agencés de manière opposée entre eux, et se faisant face.

6. Dispositif de décharge d'air selon la revendication 5, dans lequel l'élément de raccordement (28) comprend deux broches (78, 80), agencées sur des côtés opposés dudit élément de raccordement (28) s'étendant parallèlement à l'axe de rotation (B).

7. Dispositif de décharge d'air selon la revendication 6, dans lequel chaque broche (78, 80) de l'élément de raccordement (28) comprend un axe longitudinal parallèle à l'axe longitudinal de l'autre broche (80, 78).

8. Dispositif de décharge d'air selon les revendications 1 à 7, dans lequel l'ailette (16) couplée à l'élément d'actionnement (26) comprend un évidement (40) et une tige (42), dans lequel ladite tige (42) est supportée dans une fourche (44) dudit élément d'actionnement (26).

9. Dispositif de décharge d'air selon l'une quelconque des revendications 1 à 8, dans lequel l'élément d'actionnement (26) comprend une forme en forme de plaque.

10. Dispositif de décharge d'air selon les revendications 1 à 9, dans lequel l'élément de raccordement (28) comprend une structure ouverte.

11. Dispositif de décharge d'air selon l'une quelconque des revendications 1 à 10, dans lequel l'ailette de commande (12) est couplée avec au moins une ailette (14) parallèle à l'ailette de commande (12) et/ou l'ailette (16) couplée à l'élément d'actionnement (26) est couplée à au moins une ailette (16) parallèle à ladite ailette (16).

12. Dispositif de décharge d'air selon la revendication 11, dans lequel lesdites ailettes (12, 14 ; 16) sont couplées par une tige de raccordement (46).

13. Dispositif de décharge d'air selon l'une quelconque des revendications 1 à 12, dans lequel l'ailette de commande (12) comprend une section de guidage comprenant ledit guidage (58) de l'ailette de commande (12) et définissant la trajectoire de déplacement de la glissière (22).

14. Dispositif de décharge d'air selon l'une quelconque des revendications 1 à 13, dans lequel au moins l'un parmi les ailettes (12, 14, 16), les volets (30, 32), la glissière (22), l'élément d'actionnement (24), l'élément d'actionnement (26), l'élément de raccordement (28) et l'élément de guidage (60) se compose d'une matière plastique.
